# FASCICULE DE BREVET EUROPEEN

(11) **EP 2 976 572 B1**
(45) Date de publication et mention de la délivrance du brevet: **09.05.2018**
(21) Numéro de dépôt: 14715370.4
(22) Date de dépôt: 14.03.2014
(51) Int. Cl.: F23R 3/28, F23R 3/10, F23R 3/34, F23D 11/10

(54) **SYSTEME D'INJECTION POUR CHAMBRE DE COMBUSTION DE TURBOMACHINE COMPORTANT UNE PAROI ANNULAIRE A PROFIL INTERNE CONVERGENT**
EINSPRITZSYSTEM FÜR EINE BRENNKAMMER EINES TURBINENMOTOR MIT RINGFÖRMIGER WAND MIT KONVERGIERENDEM INNENQUERSCHNITT
INJECTION SYSTEM FOR A COMBUSTION CHAMBER OF A TURBINE ENGINE, COMPRISING AN ANNULAR WALL HAVING A CONVERGENT INNER CROSS-SECTION

(30) Priorité: 19.03.2013 FR 1352442
(43) Date de publication de la demande: 27.01.2016
(73) Titulaire: Snecma, 75015 Paris (FR); Office National d'Etudes et de Recherches Aérospatiales, 92300 Chatillon (FR)
(72) Inventeur: RULLAUD, Matthieu, François, F-77550 Moissy-Cramayel Cedex (FR); HERNANDEZ, Didier, F-77550 Moissy-Cramayel Cedex (FR); GUIN, Christian, F-91140 Villebon Sur Yvette (FR)
(74) Mandataire: Brevalex
(86) Numéro de dépôt international: PCT/FR2014/050603
(87) Numéro de publication internationale: WO 2014/147325

(56) Documents cités:
- WO-A1-01/51787
- US-A- 5 833 141
- US-B1- 6 543 235

## Description

### DOMAINE TECHNIQUE

La présente invention se rapporte au domaine des chambres de combustion des turbomachines, et plus particulièrement au domaine des systèmes d'injection d'air et de carburant dans ces chambres de combustion.

L'invention s'applique à tout type de turbomachines terrestres ou aéronautiques, et notamment aux turbomachines d'aéronef telles que les turboréacteurs et les turbopropulseurs.

L'invention concerne plus précisément les systèmes d'injection à double circuit d'injection de carburant, qui comportent un injecteur central, couramment appelé injecteur pilote, délivrant un débit de carburant permanent optimisé pour les bas régimes, ainsi qu'un injecteur annulaire périphérique, encore appelé injecteur principal, qui délivre un débit de carburant intermittent optimisé pour les hauts régimes, cet injecteur périphérique étant par exemple du type couramment appelé multipoint.

Ces systèmes d'injection ont été développés pour permettre aux chambres de combustion de fonctionner avec un mélange d'air et de carburant appauvri en carburant (on parle couramment de chambres de combustion à combustion pauvre étagée), et plus généralement pour une meilleure adaptation de l'injection d'air et de carburant aux différents régimes de fonctionnement des chambres de combustion, afin de réduire leur consommation en carburant et leur émission de polluants tels que les oxydes d'azote et les fumées, et de satisfaire ainsi aux normes réglementaires concernant les émissions polluantes produites à forte puissance.

### ÉTAT DE LA TECHNIQUE ANTÉRIEURE

On connaît déjà des systèmes d'injection du type précité dans l'art antérieur, notamment de par la demande de brevet français FR 2 958 015 A1.

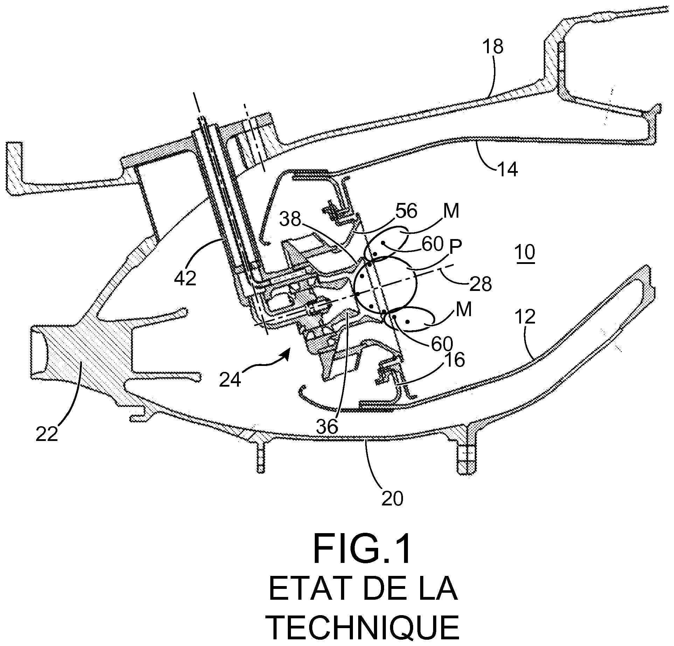

La figure 1 illustre un exemple de chambre annulaire de combustion 10 de turbomachine dite pauvre étagée. La chambre annulaire de combustion 10 comporte habituellement deux parois annulaires, respectivement interne 12 et externe 14, qui la délimitent et qui sont raccordées en amont à une paroi annulaire de fond de chambre 16, et en aval respectivement à un carter externe 18 de la turbomachine et à une virole interne 20 reliée à un diffuseur 22 agencé en amont de la chambre de combustion 10 et destiné à diffuser dans cette chambre de combustion l'air comprimé provenant d'un compresseur de la turbomachine (non visible sur la figure 1), de manière bien connue.

Le fond de chambre 16 comporte en général des orifices régulièrement répartis autour de l'axe de la chambre et dans lesquels sont montés des systèmes d'injection d'air et de carburant 24, chacun destiné à produire une flamme dans la chambre de combustion 10.

Les systèmes d'injection 24 de la chambre de combustion 10 représentée sur la figure 1 sont du type comportant un injecteur central, appelé aussi injecteur pilote, ainsi qu'un injecteur annulaire périphérique, appelé aussi injecteur principal, ce dernier étant ici du type multipoint.

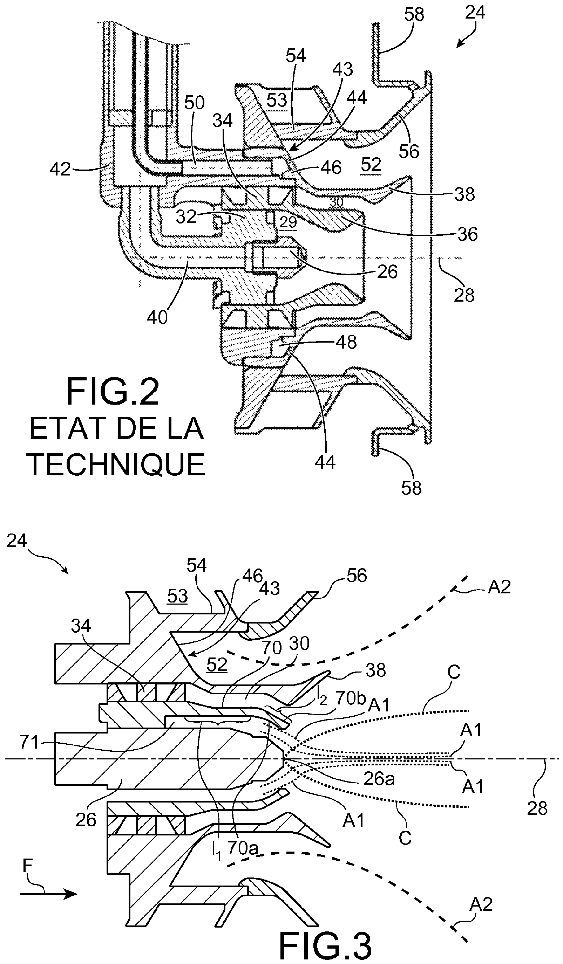

Comme le montre plus précisément la figure 2 qui est une vue à plus grande échelle du système d'injection 24 représenté sur la figure 1, l'injecteur de carburant central 26 est formé d'une buse débouchant sur un axe central 28 du système, qui constitue sensiblement un axe de symétrie pour les pièces de révolution composant le système d'injection 24.

Cet injecteur central 26 est habituellement associé à deux canaux d'admission d'air, parmi lesquels un canal interne 29 dans lequel débouche l'injecteur central 26 de sorte que le carburant pulvérisé par cet injecteur central 26 puisse être immédiatement mélangé à l'air admis dans ce canal, et un canal annulaire externe 30 qui débouche en aval dans le système d'injection 24 pour permettre un enrichissement ultérieur en air du mélange d'air et de carburant.

Les deux canaux d'admission d'air 29 et 30 précités sont en général traversés par des ailettes obliques 32 et 34 destinées à imprimer au flux d'air les traversant un mouvement de giration autour de l'axe central 28 du système d'injection 24 pour favoriser l'homogénéisation du mélange d'air et de carburant dans le système d'injection.

Chacun des deux canaux d'admission 29 et 30 précités est ainsi couramment appelé vrille, et est en général délimité extérieurement par une paroi annulaire 36, respectivement 38, à profil interne convergent-divergent, parfois appelée venturi, destinée notamment à éviter les remontées de flamme dans le système d'injection 24 en induisant une accélération de l'écoulement au voisinage aval du nez de l'injecteur de carburant.

Dans l'exemple représenté sur la figure 2, les deux canaux d'admission d'air 29 et 30, ainsi que les parois annulaires 36 et 38 les délimitant, s'étendent sensiblement selon l'axe 28 du système d'injection.

L'injecteur de carburant central 26 est habituellement alimenté par un conduit 40 partiellement logé dans un bras 42 porté par le carter externe 18 de la chambre de combustion 10 (voir figure 1).

Par ailleurs, l'injecteur de carburant périphérique ou multipoint 43 est formé d'une rangée annulaire d'orifices d'éjection de carburant 44 qui sont par exemple ménagés dans une portion amont tronconique 46 de la paroi 38 délimitant le passage annulaire externe 30 (voir figure 2).

Les orifices d'éjection de carburant 44 de l'injecteur périphérique 43 communiquent avec une cavité annulaire de distribution 48, alimentée en carburant par un conduit 50 partiellement logé dans le bras 42, et ces orifices d'éjection de carburant 44 débouchent dans un canal annulaire périphérique 52 pourvu d'un espace annulaire 53 d'admission d'un flux d'air destiné à se mélanger dans ledit canal 52 à du carburant issu dudit injecteur périphérique 43.

L'espace annulaire d'admission d'air 53 précité est traversé par des ailettes obliques 54 destinées à imprimer au flux d'air les traversant un mouvement de giration autour de l'axe central 28 du système d'injection 24.

Le canal annulaire périphérique 52 est délimité intérieurement par la paroi annulaire 38 et extérieurement par un bol 56 évasé vers l'aval et portant des moyens 58 permettant le montage du système d'injection 24 dans le fond 16 de la chambre de combustion 10.

Dans l'exemple représenté sur les figures 1 et 2, l'espace annulaire d'admission d'air 53 a une forme tronconique et est délimité intérieurement par la portion tronconique 46 de la paroi annulaire 38 de manière à présenter une ouverture tournée radialement vers l'extérieur.

En fonctionnement, le carburant pénètre dans le canal annulaire périphérique 52 par les orifices d'éjection de carburant 44 de l'injecteur périphérique 43 et ce carburant rencontre alors le flux d'air qui circule dans le canal 52, ce qui favorise l'atomisation de ce carburant, c'est-à-dire la pulvérisation de ce carburant sous forme de fines gouttelettes.

D'une manière générale, dans les systèmes d'injection comportant deux circuits d'injection de carburant, tels que par exemple le système d'injection 24 décrit ci-dessus, l'injecteur central ou pilote 26 délivre un débit de carburant qui est sensiblement permanent à tous les régimes de fonctionnement de la chambre de combustion et est optimisé pour les bas régimes, tandis que l'injecteur périphérique ou principal 43 délivre à fort régime un débit de carburant élevé qui est optimisé pour ce type de régime, et ne délivre pas de carburant à bas régime. Il est par conséquent possible d'avoir deux types de zone de combustion turbulente, comme l'illustre la figure 1 : une zone de combustion pilote P, produisant une flamme riche en carburant du fait d'un faible débit d'air, et une zone de combustion multipoint M, produisant une flamme pauvre en carburant du fait d'un fort débit d'air.

Les chambres de combustion équipées de systèmes d'injection du type décrit ci-dessus présentent néanmoins à bas régime des niveaux relativement élevés d'émission de certains polluants, tels que par exemple le monoxyde de carbone ou des hydrocarbures.

Les niveaux d'émission de polluants dépendent de la qualité de la combustion du carburant dans ces chambres de combustion, et donc notamment de la qualité de l'atomisation et de l'évaporation du carburant provenant des injecteurs des systèmes d'injection, ainsi que de la présence de zones de recirculation pour contrôler le mélange entre air et carburant dans la chambre de combustion.

Plus particulièrement, le cas des émissions de polluants à bas régime est examiné ici. A bas régime, par principe de fonctionnement, la flamme de la zone de combustion multipoint M est absente et seule la flamme de la zone de combustion pilote P est présente. Ainsi, comme l'illustre la figure 1, des gouttelettes de carburant 60 relativement grosses sont transportées rapidement, par centrifugation, depuis l'injecteur de carburant central 26 vers la zone de combustion multipoint M avec un fort débit d'air, ce qui conduit alors à l'obtention d'une mauvaise combustion du fait d'un figeage des réactions chimiques lorsque le carburant non consommé atteint la zone de combustion multipoint M avec un fort débit d'air, et ainsi à l'obtention d'émissions de polluants à bas régime. En référence à la figure 1, le figeage des réactions chimiques peut commencer dès que le carburant atteint l'interface entre la zone de combustion pilote P et la zone de combustion multipoint M. Par ailleurs, comme l'illustre la figure 1, le carburant est injecté depuis l'injecteur de carburant central 26 dans le sens des écoulements de flux d'air, ce qui réduit considérablement le niveau d'atomisation des gouttelettes 60 et leur évaporation.

Le figeage des réactions chimiques et l'injection du carburant dans le sens des écoulements de flux d'air constituent deux phénomènes de nature à réduire la qualité de la combustion dans la chambre de combustion à bas régime et donc de nature à accroître les niveaux d'émission de substances nocives pour l'environnement.

Il existe ainsi un besoin pour pouvoir conserver une zone de combustion pilote P qui soit suffisamment stable et donc turbulente, sans une trop grande interpénétration dans la zone de combustion multipoint M. En particulier, les gouttelettes 60 provenant de l'injecteur de carburant central 26 ne doivent pas être rapidement centrifugées sur la paroi annulaire 38 (voir figure 1) pour former un film de carburant pulvérisé dans la zone de cisaillement des écoulements des zones de combustion pilote P et multipoint M. En outre, à la différence de la configuration de la figure 1, il existe un besoin pour que la répartition du carburant dans la zone de combustion pilote P n'interfère pas avec la zone de combustion multipoint M. En effet, dans le cas de la figure 1 conforme à l'art antérieur, lorsqu'à bas régime seul l'injecteur central 26 délivre du carburant, les réactions chimiques sont rapidement figées par l'écoulement à fort débit d'air de la zone de combustion multipoint M.

D'une manière générale, une amélioration de la répartition du carburant dans la zone de combustion pilote ainsi qu'une amélioration de l'atomisation et de l'évaporation du carburant provenant de l'injecteur de carburant pilote dans un système d'injection à double circuit d'injection de carburant s'avère souhaitable à bas régime de fonctionnement, afin de réduire davantage les niveaux d'émission de substances nocives pour l'environnement telles que les oxydes d'azote, le monoxyde de carbone et les hydrocarbures.

Par ailleurs, les documents WO 01/51787 A1, US 5,833,141 A et US 6,543,235 B1 décrivent diverses réalisations de l'art antérieur.

### EXPOSÉ DE L'INVENTION

L'invention a pour but de remédier au moins partiellement aux besoins mentionnés ci-dessus et aux inconvénients relatifs aux réalisations de l'art antérieur.

L'invention vise notamment à permettre de mieux maîtriser l'interférence entre les zones de combustion pilote et multipoint afin de disposer d'une zone de combustion pilote qui soit suffisamment distincte de la zone de combustion multipoint, et d'obtenir une atomisation et une évaporation rapides du carburant provenant uniquement, à bas régime de fonctionnement, de l'injecteur pilote.

L'invention a ainsi pour objet, selon l'un de ses aspects, un système d'injection d'air et de carburant pour fond de chambre annulaire de combustion de turbomachine, comportant :
- au moins deux dispositifs d'injection de carburant parmi lesquels un injecteur central et un injecteur annulaire périphérique agencé autour dudit injecteur central, et
- un canal annulaire interne d'admission d'air dans lequel débouche l'injecteur central pour permettre un mélange entre le carburant provenant de l'injecteur central et l'air admis dans le canal annulaire interne, et au moins un canal annulaire externe d'admission d'air pour permettre un enrichissement en air de ce mélange et la stabilisation de la zone de combustion pilote,
le canal annulaire interne et ledit au moins un canal annulaire externe étant séparés par une paroi annulaire intermédiaire s'étendant autour de l'injecteur central et présentant un profil interne convergent, et
le canal annulaire interne étant dépourvu de vrille permettant de générer un mouvement de giration. Grâce à l'invention, il peut être possible d'obtenir une carburation plus homogène du coeur de la zone de combustion pilote et un gain sur la maîtrise de l'atomisation et de l'évaporation du carburant provenant de l'injecteur pilote. Un film d'air convergent peut ainsi être formé autour de l'injecteur pilote pour permettre de « guider » le flux de carburant issu de l'injecteur pilote principalement vers la zone de combustion pilote et non à la périphérie de celle-ci, à l'interface avec la zone de combustion multipoint. Ce meilleur contrôle de la combustion du carburant provenant de l'injecteur pilote peut permettre d'éviter le figeage des réactions chimiques par un fort débit d'air de la zone de combustion multipoint et de réduire les émissions de substances polluantes aux bas régimes de combustion.

Dans toute la description, il est noté que les termes « amont » et « aval » sont à considérer par rapport à une direction principale F d'écoulement normal de l'air et du carburant (de l'amont vers l'aval) pour un système d'injection. Par ailleurs, les dénominations « profil externe » et « profil interne » sont respectivement en association avec un profil qui est dirigé à l'opposé de l'axe central du système d'injection et un profil qui est dirigé vers l'axe central du système d'injection. Enfin, les termes « convergent » et « divergent » sont respectivement en lien avec une orientation en rapprochement d'un flux considéré et une orientation en éloignement du flux considéré.

Le système d'injection selon l'invention peut en outre comporter l'une ou plusieurs des caractéristiques suivantes prises isolément ou suivant toutes combinaisons techniques possibles.

L'injecteur annulaire périphérique peut être du type couramment appelé multipoint.

Le système d'injection selon l'invention peut comporter une pluralité de canaux annulaires externes d'admission d'air, notamment au moins deux canaux annulaires externes, voire au moins trois, voire encore au moins quatre canaux annulaires externes.

Les canaux annulaires externes peuvent être superposés radialement les uns aux autres, et peuvent être superposés radialement au canal annulaire interne.

La paroi annulaire intermédiaire s'étend entre le canal annulaire interne et le canal annulaire externe le plus proche de l'axe central du système d'injection. Selon l'invention, la paroi annulaire intermédiaire présente un profil interne qui converge vers l'axe central du système d'injection. Ainsi, par « profil interne convergent », il faut comprendre que le profil interne de la paroi annulaire intermédiaire est exclusivement convergent. En particulier, le cas d'un profil interne divergent par rapport à l'axe central du système d'injection, par exemple un profil interne convergent-divergent, est exclu. Autrement dit encore, la paroi annulaire intermédiaire peut présenter un col tronqué au niveau de son extrémité proche du nez de l'injecteur central.

La paroi annulaire intermédiaire peut en particulier présenter un profil interne qui converge vers l'axe central du système d'injection de sorte que l'écoulement de carburant pulvérisé par l'injecteur central et l'écoulement d'air sortant du canal annulaire interne soient sensiblement perpendiculaires. L'orientation de la paroi annulaire intermédiaire pour permettre un écoulement d'air sensiblement perpendiculaire à l'injection de carburant peut permettre de favoriser l'atomisation et l'évaporation du carburant. Le transport des gouttelettes de carburant, pulvérisées en sortie de l'injecteur pilote, est alors imposé par l'écoulement d'air du canal annulaire interne selon l'axe central du système d'injection, et non plus par l'effet de centrifugation, et donc le carburant peut s'éloigner de la zone de combustion multipoint permettant une meilleure répartition du carburant dans la zone de combustion pilote. Selon l'invention, le canal annulaire interne n'est pas apte à générer un mouvement de giration (ou « swirl » en anglais). Autrement dit, le canal annulaire interne n'est pas vrillé pour permettre un tel mouvement de giration, c'est-à-dire que le canal annulaire interne est dépourvu de vrille permettant de générer un mouvement de giration.

L'absence d'un tel mouvement de giration au niveau du canal annulaire interne permet d'éviter un brusque éclatement de l'écoulement d'air qui pourrait conduire à un transport de carburant vers la zone de combustion multipoint.

La paroi annulaire intermédiaire peut comporter une première portion amont s'étendant sensiblement selon l'axe central du système d'injection et une deuxième portion aval convergente vers l'axe central du système d'injection. La longueur de la paroi annulaire intermédiaire, et notamment la longueur de la première portion et/ou de la deuxième portion, peut être choisie de sorte à être suffisante pour permettre le guidage de l'écoulement d'air vers le nez de l'injecteur central.

L'orientation de la deuxième portion de la paroi annulaire intermédiaire vers l'axe central du système d'injection peut être sensiblement la même que l'orientation du nez de l'injecteur central.

La paroi annulaire intermédiaire peut s'étendre le long de l'axe central autour de l'injecteur central et peut s'interrompre sensiblement en superposition avec le nez de l'injecteur central. Ainsi, la paroi annulaire intermédiaire peut se terminer dans le même plan que celui contenant le nez de l'injecteur central, ce plan étant sensiblement perpendiculaire à l'axe central du système d'injection.

L'injection d'air depuis le canal annulaire interne directement vers le nez de l'injecteur central, par le biais du profil interne convergent de la paroi annulaire intermédiaire, peut permettre d'empêcher des remontées de flamme, et ainsi d'avancer le nez de l'injecteur vers la zone de combustion pilote en bénéficiant de la meilleure distinction entre zones de combustion pilote et multipoint. La présence d'une paroi à profil interne convergent-divergent formant venturi peut alors ne plus être nécessaire. Toutefois, la présence d'une telle paroi à profil interne convergent-divergent formant venturi, située alors en particulier en aval de la paroi annulaire intermédiaire, peut le cas échéant permettre d'améliorer davantage l'empêchement de remontées de flamme, ainsi que l'homogénéisation entre air et carburant. En outre, la présence de plusieurs canaux annulaires externes vrillés, c'est-à-dire permettant de générer un mouvement de giration, peut permettre de mieux contrôler les recirculations entre les zones de combustion pilote et multipoint ou encore de favoriser le mélange entre air et carburant.

Ledit au moins un canal annulaire externe peut être apte à être traversé par des ailettes, notamment des ailettes obliques, destinées à imprimer au flux d'air les traversant un mouvement de giration autour de l'axe central du système d'injection. Les ailettes peuvent être choisies de sorte à générer un faible mouvement de giration. Autrement dit, à la différence du canal annulaire interne, ledit au moins un canal annulaire externe peut être apte à générer un mouvement de giration. L'introduction d'un tel mouvement de giration dans ledit au moins un canal annulaire externe peut permettre d'obtenir, le cas échéant, de meilleurs performances sur la combustion de carburant issu de l'injecteur central. Un tel mouvement de giration, généré dans ledit au moins un canal annulaire externe par la présence des ailettes, peut permettre de générer au moins une zone de recirculation, notamment une zone de recirculation en amont de la zone de combustion pilote et une zone de recirculation en aval de la zone de combustion pilote, autour de la zone de combustion pilote formée par l'injecteur central. Ladite au moins une zone de recirculation peut permettre une stabilisation de la flamme générée dans la zone de combustion pilote.

Ladite au moins une zone de recirculation, notamment la zone de recirculation située en aval de la zone de combustion pilote, peut de plus permettre une combustion complète de la zone de combustion pilote.

La structure aérodynamique et ladite au moins une zone de recirculation autour de la zone de combustion pilote peuvent être maîtrisées par la présence dudit canal annulaire externe d'admission d'air.

Ledit au moins un canal annulaire externe peut être délimité extérieurement par une paroi annulaire, notamment une paroi annulaire à profil interne convergent-divergent, dans une portion amont de laquelle sont ménagés des orifices d'éjection de carburant formant l'injecteur annulaire périphérique. Ces orifices d'éjection de carburant peuvent déboucher dans un canal annulaire périphérique pourvu d'un espace annulaire d'admission d'un flux d'air destiné à se mélanger dans le canal annulaire périphérique avec du carburant issu de l'injecteur annulaire périphérique.

Cette paroi annulaire peut présenter une portion de profil interne convergent, orientée vers l'axe central du système d'injection. Cette portion de profil interne convergent peut être superposée à la deuxième portion aval convergente de la paroi annulaire intermédiaire. Cette portion de profil interne convergent et la deuxième portion aval convergente de la paroi annulaire intermédiaire peuvent être orientées vers l'axe central du système d'injection en s'étendant sensiblement parallèlement entre elles.

L'espace annulaire d'admission d'air peut être traversé par des ailettes destinées à imprimer au flux d'air les traversant un mouvement de giration autour de l'axe central du système d'injection.

L'invention a encore pour objet, selon un autre de ses aspects, une chambre annulaire de combustion pour turbomachine, caractérisée en ce qu'elle comporte au moins un système d'injection tel que défini précédemment.

L'invention a encore pour objet, selon un autre de ses aspects, une turbomachine, caractérisée en ce qu'elle comporte une chambre annulaire de combustion telle que définie précédemment.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 est une demi-vue, en coupe axiale, d'une chambre annulaire de combustion de turbomachine comportant des systèmes d'injection selon l'art antérieur,
- la figure 2 est une vue, en coupe axiale, à plus grande échelle illustrant un système d'injection de la chambre de combustion de la figure 1,
- la figure 3 est une vue, en coupe axiale, d'un exemple de système d'injection conforme à l'invention,
- la figure 4 est une vue, en perspective, de la zone pilote du système d'injection de la figure 3,
- la figure 5 est une vue, en coupe axiale, illustrant la formation de zones de recirculation, notamment entre la zone de combustion pilote et la zone de combustion multipoint, obtenues par le système d'injection de la figure 3, et
- la figure 6 est une vue, en coupe axiale, d'un autre exemple de système d'injection conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 et 2, relatives à une chambre annulaire de combustion 10 de turbomachine comportant des systèmes d'injection 24 selon l'art antérieur, ont déjà été décrites précédemment.

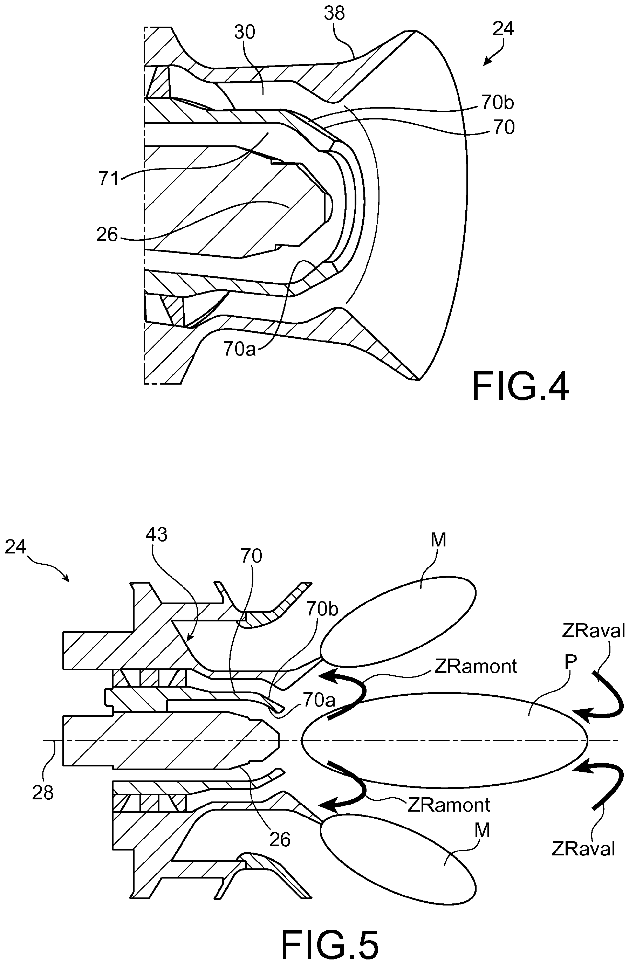

En référence aux figures 3 à 5, on a représenté un premier exemple de système d'injection 24 conforme à l'invention. Les figures 3 et 4 sont respectivement des vues en coupe axiale et en perspective du système d'injection 24, et la figure 5 illustre la formation de zones de recirculation entre la zone de combustion pilote et la zone de combustion multipoint obtenues grâce au système d'injection 24.

Un tel système d'injection 24 peut être destiné à équiper une chambre annulaire de combustion 10 de turbomachine, notamment telle que celle décrite précédemment en référence aux figures 1 et 2, et être d'un type semblable au système d'injection 24 des figures 1 et 2. Aussi, seuls les éléments propres au système d'injection 24 selon l'invention sont décrits ci-après et on peut se référer à la description précédente pour ce qui concerne les éléments semblables à ceux des figures 1 et 2.

Comme on peut le voir notamment sur les figures 3 et 4, le système d'injection d'air et de carburant 24 comporte un injecteur central 26 muni d'un nez 26a permettant de pulvériser un flux de carburant C, et un injecteur annulaire périphérique 43 agencé autour de l'injecteur central 26. L'injecteur annulaire périphérique 43 est en particulier un injecteur du type multipoint.

Le système d'injection 24 comporte en outre un canal annulaire interne 71 d'admission d'air dans lequel débouche l'injecteur central 26 pour permettre un mélange entre le carburant C provenant de l'injecteur central 26 et le flux d'air A1 admis dans le canal annulaire interne 71 pour éviter une trop forte centrifugation des gouttelettes de carburant, et également un canal annulaire externe 30 d'admission d'air, générant un mouvement de giration à la différence du canal annulaire interne 71, pour permettre un enrichissement ultérieur en air de ce mélange et stabiliser la zone de combustion pilote P, ainsi que pour contrôler les structures aérodynamiques de la zone de combustion pilote P dont les zones de recirculation ZRₐₘₒₙₜ et ZRₐᵥₐₗ décrites plus loin en référence à la figure 5.

Conformément à l'invention, le canal annulaire interne 71 et le canal annulaire externe 30 sont séparés par une paroi annulaire intermédiaire 70 qui s'étend autour de l'injecteur central 26 et qui présente un profil interne 70a convergent.

Plus particulièrement, la paroi annulaire intermédiaire 70 comporte une première portion amont I₁ qui s'étend sensiblement rectilignement selon l'axe central 28 du système d'injection 24, autour de l'injecteur central 26, et une deuxième portion aval I₂ qui converge vers l'axe central 28 du système d'injection 24.

La paroi annulaire intermédiaire 70 s'étend en outre le long de l'axe central 28 autour de l'injecteur central 26 puis s'interrompt sensiblement en superposition avec le nez 26a de l'injecteur central 26, de sorte que le flux d'air A1 provenant du canal annulaire interne 71 et le flux de carburant C provenant du nez 26a de l'injecteur central 26 se retrouvent mélangés l'un avec l'autre dans une zone à forts gradients pour améliorer la pulvérisation.

La paroi annulaire intermédiaire 70 présente également un profil externe 70b convergent, en vis-à-vis avec une portion divergente de la paroi annulaire 38.

Le canal annulaire interne 71 et la paroi annulaire intermédiaire 70 constituent ensemble un film d'air convergent permettant une carburation plus homogène du coeur de la zone de combustion pilote P.

L'orientation de la paroi annulaire intermédiaire 70 dotée d'un profil interne 70a convergent vers l'axe central 28 du système d'injection 24 peut permettre d'obtenir une injection du carburant C sensiblement perpendiculairement à l'écoulement d'air A1 provenant du canal annulaire interne 71.

L'injection du carburant C sensiblement perpendiculairement à l'écoulement d'air A1 peut imposer la direction de transport des gouttelettes de carburant C le long de l'axe central 28 vers la zone de combustion pilote P.

Avantageusement, le flux de carburant C est ainsi éloigné de la zone de combustion multipoint M pour mieux alimenter la zone de combustion pilote P.

La figure 5 illustre la distinction obtenue entre la zone de combustion pilote P et la zone de combustion multipoint M. En outre, comme on peut le voir sur la figure 3, le flux de carburant C est alors éloigné de l'écoulement d'air A2 provenant du canal annulaire périphérique 52 (encore appelé la vrille principale).

Par ailleurs, comme on peut le voir sur la figure 5, la stabilisation de la flamme au niveau de la zone de combustion pilote P peut nécessiter la présence d'une zone de recirculation ZRₐₘₒₙₜ, proche du nez 26a de l'injecteur central 26, et d'une zone de recirculation ZRₐᵥₐₗ, située en aval de la zone de combustion pilote P.

La zone de recirculation ZRₐₘₒₙₜ ou ZRₐᵥₐₗ peut par exemple être générée par le mouvement de giration obtenu des vrilles intermédiaire (canal externe 30) et principale (canal périphérique 52), lesquelles peuvent être dotées d'ailettes obliques 34 et 54 telles que décrites précédemment.

La structure aérodynamique et les zones de recirculation ZRₐₘₒₙₜ et ZRₐᵥₐₗ autour de la zone de combustion pilote P peuvent être maîtrisées par la présence du canal externe 30 d'admission d'air.

La formation d'un film d'air convergent dans la zone pilote du système d'injection 24, obtenu par la présence de la paroi annulaire intermédiaire 70 dotée d'un profil interne 70a convergent, peut permettre d'obtenir une flamme dans la zone de combustion pilote P suffisamment distincte de l'écoulement principal de la zone de combustion multipoint M pour éviter le figeage des réactions de combustion de la flamme pilote, et une alimentation en carburant depuis l'injecteur central 26 rapide avec une atomisation et une évaporation optimisées. De la sorte, il peut être possible d'améliorer fortement la combustion du carburant et ainsi de réduire davantage le niveau d'émission de substances nocives pour l'environnement.

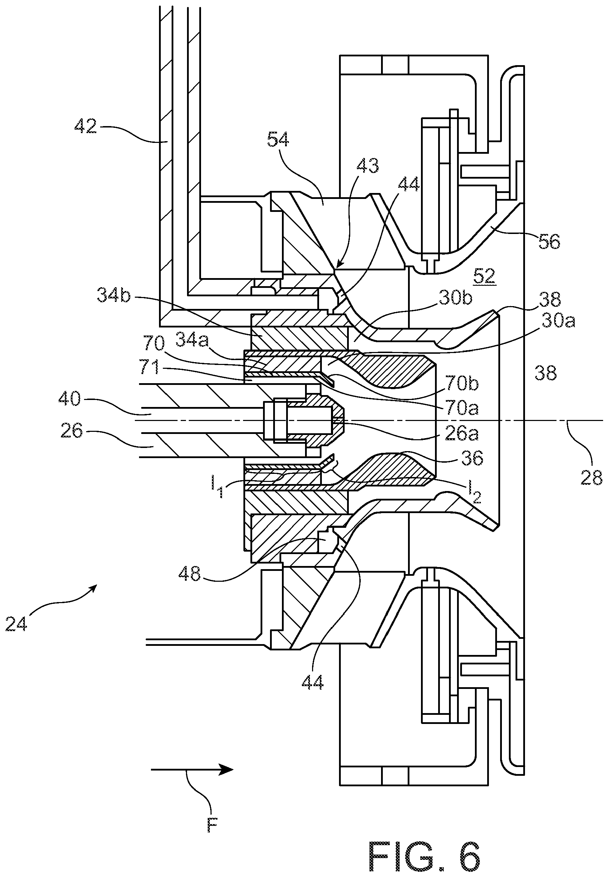

En référence à la figure 6, on a représenté un deuxième exemple de système d'injection 24 conforme à l'invention.

A la différence du premier exemple de système d'injection 24 représenté sur les figures 3 à 5, le système d'injection 24 de la figure 6 comporte deux canaux annulaires externes 30a et 30b d'admission d'air, superposés radialement l'un à l'autre.

Chaque canal annulaire externe 30a, 30b est respectivement traversé par des ailettes obliques 34a, 34b, destinées à imprimer au flux d'air les traversant un mouvement de giration autour de l'axe central 28 du système d'injection 24. Ce mouvement de giration peut favoriser l'apparition des zones de recirculation ZRₐₘₒₙₜ et ZRₐᵥₐₗ, telles que décrites précédemment. Selon l'invention, le canal annulaire interne 71 n'est quant à lui pas apte à générer un mouvement de giration.

La paroi annulaire intermédiaire 70 comporte en outre une première portion amont I₁ qui s'étend sensiblement rectilignement selon l'axe central 28 du système d'injection 24, autour de l'injecteur central 26, et une deuxième portion aval I₂ qui converge vers l'axe central 28 du système d'injection 24.

De plus, la paroi annulaire intermédiaire 70 s'étend le long de l'axe central 28 autour de l'injecteur central 26 puis s'interrompt sensiblement en superposition avec le nez 26a de l'injecteur central 26, comme décrit précédemment.

La présence supplémentaire d'une paroi annulaire 36 à profil interne convergent-divergent, ou encore venturi 36, peut permettre d'améliorer encore plus l'effet obtenu par la paroi annulaire intermédiaire 70 d'évitement des remontées de flamme dans le système d'injection 24.

Bien entendu, l'invention n'est pas limitée aux exemples de réalisation qui viennent d'être décrits. Diverses modifications peuvent y être apportées par l'homme du métier dans le cadre des revendications. L'expression « comportant un » doit être comprise comme étant synonyme de « comportant au moins un », sauf si le contraire est spécifié.

## Revendications

1. Système d'injection d'air et de carburant (24) pour fond de chambre annulaire de combustion (10) de turbomachine, comportant :
- au moins deux dispositifs d'injection de carburant parmi lesquels un injecteur central (26) et un injecteur annulaire périphérique (43) agencé autour dudit injecteur central (26), et
- un canal annulaire interne (71) d'admission d'air dans lequel débouche l'injecteur central (26) pour permettre un mélange entre le carburant provenant de l'injecteur central (26) et l'air admis dans le canal annulaire interne (71), et au moins un canal annulaire externe (30 ; 30a, 30b) d'admission d'air pour permettre un enrichissement en air de ce mélange et la stabilisation de la zone de combustion pilote (P),
le canal annulaire interne (71) et ledit au moins un canal annulaire externe (30 ; 30a, 30b) étant séparés par une paroi annulaire intermédiaire (70) s'étendant autour de l'injecteur central (26) et présentant un profil interne (70a) convergent,
le canal annulaire interne (71) étant dépourvu de vrille permettant de générer un mouvement de giration.

2. Système d'injection selon la revendication 1, dans lequel la paroi annulaire intermédiaire (70) présente un profil interne (70a) qui converge vers l'axe central (28) du système d'injection (24) de sorte que l'écoulement de carburant pulvérisé par l'injecteur central (26) et l'écoulement d'air sortant du canal annulaire interne (71) soient sensiblement perpendiculaires.

3. Système d'injection selon la revendication 1 ou 2, dans lequel la paroi annulaire intermédiaire (70) comporte une première portion amont (l₁) s'étendant sensiblement selon l'axe central (28) du système d'injection (24) et une deuxième portion aval (l₂) convergente vers l'axe central (28) du système d'injection (24).

4. Système d'injection selon l'une des revendications précédentes, dans lequel
la paroi annulaire intermédiaire (70) s'étend le long de l'axe central (28) autour de l'injecteur central (26) et s'interrompt sensiblement en superposition avec le nez (26a) de l'injecteur central (26).

5. Système d'injection selon l'une quelconque des revendications précédentes, qui comporte une pluralité de canaux annulaires externes d'admission d'air, notamment au moins deux canaux annulaires externes (30a, 30b).

6. Système d'injection selon l'une quelconque des revendications précédentes, dans lequel ledit au moins un canal annulaire externe (30; 30a, 30b) est apte à générer un mouvement de giration, étant notamment traversé par des ailettes destinées à imprimer au flux d'air les traversant un mouvement de giration autour de l'axe central (28) du système d'injection (24), permettant de générer au moins une zone de recirculation (ZRₐₘₒₙₜ, ZRₐᵥₐₗ) autour de la zone de combustion pilote (P) formée par l'injecteur central (26).

7. Chambre annulaire de combustion (10) pour turbomachine, **caractérisée en ce qu'**elle comporte au moins un système d'injection (24) selon l'une quelconque des revendications précédentes.

8. Turbomachine, **caractérisée en ce qu'**elle comporte une chambre annulaire de combustion (10) selon la revendication 7.

## Patentansprüche

1. Luft- und Brennstoff-Einspritzsystem (24) für den Boden einer ringförmigen Brennkammer (10) von Turbotriebwerken, bestehend aus:
- mindestens zwei Brennstoff-Einspritzvorrichtungen, darunter ein in der Mitte gelegener Einspritzer (26) und ein am Außenumfang gelegener ringförmiger Einspritzer (43), der um diesen in der Mitte gelegenen Einspritzer (26) herum angeordnet ist, und
- einem inneren ringförmigen Kanal (71) zur Luftzuführung, in den der in der Mitte gelegene Einspritzer (26) mündet, um ein Gemisch aus dem Brennstoff, der vom in der Mitte gelegenen Einspritzer (26) kommt, und der Luft, die in den inneren ringförmigen Kanal (71) zugeführt wird, zu ermöglichen, sowie aus mindestens einem äußeren ringförmigen Kanal (30; 30a, 30b) zur Luftzuführung, um eine Anreicherung dieses Gemischs mit Luft und die Stabilisierung des Pilot-Verbrennungsbereichs (P) zu ermöglichen,
wobei der innere ringförmige Kanal (71) und der mindestens eine äußere ringförmige Kanal (30; 30a, 30b) durch eine ringförmige Zwischenwand (70) voneinander getrennt sind, die sich um den in der Mitte gelegenen Einspritzer (26) herum erstreckt und ein konvergierendes Innenprofil (70a) aufweist,
wobei der innere ringförmige Kanal (71) frei von Verwindungen ist und die Erzeugung einer Kreisdrehbewegung erlaubt.

2. Einspritzsystem nach Anspruch 1, wobei die ringförmige Zwischenwand (70) ein Innenprofil (70a) aufweist, das zur Mittelachse (28) des Einspritzsystems (24) hin konvergiert, so dass der Strom des vom in der Mitte gelegenen Einspritzer (26) zerstäubten Brennstoffs und der aus dem inneren ringförmigen Kanal (71) austretende Luftstrom im Wesentlichen im rechten Winkel zueinander gerichtet sind.

3. Einspritzsystem nach Anspruch 1 oder 2, wobei die ringförmige Zwischenwand (70) einen ersten, stromaufwärts gelegenen Abschnitt (l₁) aufweist, der sich im Wesentlichen gemäß der Mittelachse (28) des Einspritzsystems (24) erstreckt, und einen zweiten, stromabwärts gelegenen Abschnitt (l₂) aufweist, der zur Mittelachse (28) des Einspritzsystems (24) hin konvergiert.

4. Einspritzsystem nach einem der vorherigen Ansprüche, wobei die ringförmige Zwischenwand (70) sich entlang der Mittelachse (28) um den in der Mitte gelegenen Einspritzer (26) herum erstreckt und im Wesentlichen im Überlagerungsbereich mit der Nase (26a) des in der Mitte gelegenen Einspritzers (26) eine Lücke aufweist.

5. Einspritzsystem nach einem der vorherigen Ansprüche, welches eine Vielzahl von äußeren ringförmigen Kanälen (71) zur Luftzuführung enthält, insbesondere mindestens zwei äußere ringförmige Kanäle (30a, 30b).

6. Einspritzsystem nach einem der vorherigen Ansprüche, wobei der genannte mindestens eine äußere ringförmige Kanal (30; 30a, 30b) geeignet ist, eine Kreisdrehbewegung zu erzeugen, indem insbesondere Flügel durch ihn hindurch verlaufen, die dazu vorgesehen sind, den durch sie strömenden Luftstrom in eine Kreisdrehbewegung um die Mittelachse (28) des Einspritzsystems (24) zu versetzen, wodurch es ermöglicht wird, mindestens eine Rezirkulationszone (ZRₐₘₒₙₜ, ZRₐᵥₐₗ) um den von dem in der Mitte gelegenen Einspritzer (26) gebildeten Pilot-Verbrennungsbereich (P) herum zu erzeugen.

7. Ringförmige Brennkammer (10) für Turbotriebwerke,
**dadurch gekennzeichnet,**
**dass** sie mindestens ein Einspritzsystem (24) nach einem der vorherigen Ansprüche enthält.

8. Turbotriebwerk,
**dadurch gekennzeichnet,**
**dass** es eine ringförmige Brennkammer (10) nach Anspruch 7 enthält.

## Claims

1. Air and fuel injection system (24) for an annular turbine engine combustion chamber (10) dome comprising:
- at least two fuel injection devices including a central injector (26) and peripheral annular injector (43) arranged around said central injector (26), and
- an inner annular air inlet channel (71) into which the central injector (26) opens up to enable a mix between fuel originating from the central injector (26) and air inlet into the inner annular channel (71), and at least one outer annular air inlet channel (30 ; 30a, 30b) to enable enrichment of this mix with air and stabilisation of the pilot combustion zone (P),
the inner annular channel (71) and said at least one outer annular channel (30 ; 30a, 30b) being separated by an intermediate annular wall (70) extending around the central injector (26) and having a convergent inner profile (70a),
the inner annular channel (71) not having a swirler to generate a swirl movement.

2. Injection system according to claim 1, wherein the intermediate annular wall (70) has an inner profile (70a) that is convergent towards the central axis (28) of the injection system (24) such that the fuel flow sprayed by the central injector (26) and the air flow output from the inner annular channel (71) are approximately perpendicular.

3. Injection system according to claim 1 or 2, wherein the intermediate annular wall (70) comprises a first upstream portion (l₁) extending approximately along the central axis (28) of the injection system (24) and a second downstream portion (b) convergent towards the central axis (28) of the injection system (24).

4. Injection system according to one of the previous claims, wherein the intermediate annular wall (70) extends along the central axis (28) around the central injector (26) and is interrupted approximately superposed over the nose (26a) of the central injector (26).

5. Injection system according to any one of the previous claims, comprising a plurality of outer annular air inlet channels, particularly at least two outer annular channels (30a, 30b).

6. Injection system according to any one of the previous claims, wherein said at least one outer annular channel (30 ; 30a, 30b) is capable of generating a swirl movement, particularly since fins pass through it to force a swirling movement on the air flow passing between them about the central axis (28) of the injection system (24), allowing to generate at least one recirculation zone (ZRᵤₚₛₜᵣₑₐₘ, ZR_{downstream}) around the pilot combustion zone (P) formed by the central injector (26).

7. Annular combustion chamber (10) for a turbine engine, **characterised in that** it comprises at least one injection system (24) according to any one of the previous claims.

8. Turbine engine, **characterised in that** it comprises an annular combustion chamber (10) according to claim 7.
